# EUROPÄISCHE PATENTANMELDUNG

(11) **EP 4 818 556 A1**
(43) Veröffentlichungstag der Anmeldung: **07.10.2026**
(21) Anmeldenummer: 25167811.6
(22) Anmeldetag: 01.04.2025
(51) Int. Cl.: F16H 49/00, F16H 55/08

(54) **WELLGETRIEBE MIT EINEM FLEXRAD UND EINEM HOHLRAD**

(71) Anmelder: maxon international ag, 6072 Sachseln (CH)
(72) Erfinder: Landwehr, Maximilian, 79215 Elzach (DE); Schneider, Benjamin, 79312 Emmendingen (DE); Lehmann, Ernst von, 79286 Glottertal (DE)
(74) Vertreter: Grünecker Patent- und Rechtsanwälte PartG mbB

(57) **Zusammenfassung**

Die vorliegende Erfindung betrifft Wellgetriebe mit einem elastisch verformbaren Flexrad mit Außenverzahnung, einem Hohlrad mit Innenverzahnung und einer Kurvenscheibe, wobei das Flexrad, das Hohlrad und die Kurvenscheibe um eine gemeinsame Achse, die eine axiale Richtung des Wellgetriebes definiert, angeordnet sind, wobei die Außenverzahnung eine Mehrzahl von Zähnen des Flexrads und die Innenverzahnung eine Mehrzahl von Zähnen des Hohlrads aufweist und die Mehrzahl an Zähnen des Flexrads kleiner als die Mehrzahl an Zähnen des Hohlrads ist, wobei die Zähne des Hohlrads jeweils eine erste Verzahnungsgeometrie und die Zähne des Flexrads jeweils eine zweite Verzahnungsgeometrie aufweisen. Erfindungsgemäß ist vorgesehen, dass die erste Verzahnungsgeometrie und die zweite Verzahnungsgeometrie derart ausgebildet sind, dass ein Verzahnungsbereich der Zähne des Flexrads und der Zähne des Hohlrads in axialer Richtung in einen ersten Seitenbereich, einen mittleren Bereich und einen zweiten Seitenbereich aufteilbar ist.

## Beschreibung

Die vorliegende Erfindung bezieht sich auf ein Wellgetriebe gemäß dem Oberbegriff des Anspruchs 1.

Ein gattungsgemäßes Wellgetriebe umfasst ein elastisch verformbares Flexrad mit Außenverzahnung, ein Hohlrad mit Innenverzahnung und eine Kurvenscheibe, wobei das Flexrad, das Hohlrad und die Kurvenscheibe um eine gemeinsame Achse, die eine axiale Richtung des Wellgetriebes definiert, angeordnet sind, wobei die Außenverzahnung eine Mehrzahl von Zähnen des Flexrads und die Innenverzahnung eine Mehrzahl von Zähnen des Hohlrads aufweist und die Mehrzahl an Zähnen des Flexrads kleiner als die Mehrzahl an Zähnen des Hohlrads ist, wobei die Zähne des Flexrads jeweils eine erste Verzahnungsgeometrie und die Zähne des Hohlrads jeweils eine zweite Verzahnungsgeometrie aufweisen.

Im Stand der Technik ist ein Querschnitt der ersten Verzahnungsgeometrie und ein Querschnitt der zweiten Verzahnungsgeometrie zumeist über eine axiale Ausdehnung eines Verzahnungsbereichs der Zähne des Flexrads und der Zähne des Hohlrads konstant. Es hat sich gezeigt, dass eine Lastverteilung im Verzahnungsbereich bei einer Drehmomentübertragung durch das derartige Wellgetriebe ungleichmäßig ausgebildet ist und es zu einer inhomogenen Bauteilbeanspruchung, insbesondere des Flexrads und dessen Außenverzahnung, kommt. Die hoch beanspruchten Bereiche sind dann ein Ausgangspunkt für potenziellen Schäden des Wellgetriebes und limitieren das maximal übertragbare Drehmoment.

Gemäß der CN113446376A kann der Verschleiß durch Abrieb und Reibung bei hohen Drehmomenten verringert werden, wenn das Flexrad und dabei insbesondere die erste Verzahnungsgeometrie derart ausgebildet ist, dass in Axialschnitten durch das Flexrad, die durch einen Scheitelpunkt eines Zahnkopfs eines Zahns des Flexrads verlaufen, eine Außenkonturlinie des Flexrads als kontinuierlich ansteigende und anschließend direkt abfallende Kurve ausgeführt ist, wobei die erste Verzahnungsgeometrie symmetrisch in Bezug auf eine Schnittebene der Axialschnitte ausgebildet ist. Dabei hat sich auch für diese bekannte Ausführung des Wellgetriebes gezeigt, dass ein weiterer Verbesserungsbedarf für die Drehmomentübertragung und die Bauteilbeanspruchung besteht.

Die Aufgabe der vorliegenden Erfindung besteht daher darin, ein Wellgetriebe anzugeben, das eine verbesserte Drehmomentübertragung bei einer verringerten Bauteilbeanspruchung ermöglicht.

Die Aufgabe wird durch die Merkmale des unabhängigen Anspruchs 1 gelöst. Demnach liegt eine erfindungsgemäße Lösung der Aufgabe vor, wenn die erste Verzahnungsgeometrie und die zweite Verzahnungsgeometrie derart ausgebildet sind, dass ein Verzahnungsbereich der Zähne des Flexrads und der Zähne des Hohlrads in axialer Richtung in einen ersten Seitenbereich, einen mittleren Bereich und einen zweiten Seitenbereich aufteilbar ist, wobei sich der erste Seitenbereich und der zweite Seitenbereich jeweils an eines der zwei axialen Enden des mittleren Bereichs anschließen, und in Axialschnitten mit einem Umfangswinkel, bei dem sich in radialer Richtung eine Zahnflanke eines Zahns des Flexrads mit einer Zahnflanke eines Zahns des Hohlrads überlappt, bei einem Stillstand der Kurvenscheibe ein radialer Abstand zwischen einer Außenkonturlinie des Flexrads und einer Innenkonturlinie des Hohlrads über eine axiale Ausdehnung des Verzahnungsbereichs im mittleren Bereich konstant ist und in dem ersten Seitenbereich und dem zweiten Seitenbereich zu den jeweiligen axialen Enden des Verzahnungsbereichs, vorzugsweise stetig, ansteigt.

Durch die erfindungsgemäße Lösung können lokale Spannungsspitzen an der miteinander in Kontakt stehenden Außenverzahnung und Innenverzahnung bei der Drehmomentübertragung reduziert werden und gleichzeitig die Drehmomentübertragung gegenüber dem Stand der Technik verbessert werden. Der sich zu den axialen Enden des Verzahnungsbereichs stetig steigernden radiale Abstand der Außenkonturlinie und Innenkonturlinien bei Stillstand der Kurvenscheibe wird bei der Drehmomentübertragung von Flexrad auf Hohlrad durch die Drehung der Kurvenscheibe und der damit einhergehenden elastischen Verformung des Flexrads geschlossen oder verringert, sodass sich die Außenverzahnung und Innenverzahnung im Betrieb des Wellgetriebes harmonisch aneinanderschmiegen, wodurch punktuelle Belastungen auf die Außenverzahnung und Innenverzahnung verringert werden. Daneben sorgt der mittlere Bereich mit einem konstanten radialen Abstand für eine breitere Kontaktauflagefläche zwischen den Zahnflanken der Zähne des Flexrads und den Zahnflanken der Zähne des Hohlrads, wodurch zusätzlich lokale Spannungsspitzen vermieden werden können.

Vorzugsweise umfassen der erste Seitenbereich und der zweite Seitenbereich jeweils ein axiales Ende des Verzahnungsbereichs.

Im Sinne der Erfindung umfasst der Verzahnungsbereich der Zähne des Flexrads und der Zähne des Hohlrads, den axialen Bereich der Zähne des Flexrads und der Zähne des Hohlrads, bzw. der ersten Verzahnungsgeometrie und der zweiten Verzahnungsgeometrie, in dem die Zahnflanken der Zähne des Flexrads mit den Zahnflanken der Zähne des Hohlrads bei der Drehmomentübertragung von Flexrad auf Hohlrad in Kontakt kommen.

Im Sinne der Erfindung handelt es sich bei dem Axialschnitt um einen Schnitt, dessen Schnittebene die Achse umfasst, wobei die Ausrichtung der Schnittebene des Axialschnitts um die Achse durch den Umfangswinkel definiert wird, der gemäß Anspruch 1 zumindest derart wählbar ist, dass die Schnittebene eine Zahnflanke eines Zahns des Flexrads und eine Zahnflanke eines Zahns des Hohlrads schneidet.

Die Außenkonturlinie entspricht im Sinne der Erfindung der äußeren Kontur des Flexrads gegenüber der Achse in dem Axialschnitt in der radialen Richtung zur Achse, in der der Axialschnitt die eine Zahnflanke eines Zahns des Flexrads und die eine Zahnflanke eines Zahns des Hohlrads schneidet.

Die Innenkonturlinie entspricht Im Sinne der Erfindung der inneren Kontur des Hohlrads gegenüber der Achse in dem Axialschnitt in der radialen Richtung zur Achse, in der der Axialschnitt die eine Zahnflanke eines Zahns des Flexrads und die eine Zahnflanke eines Zahns des Hohlrads schneidet.

Im Sinne der Erfindung kann der konstante radiale Abstand im mittleren Bereich auch gleich 0 sein.

Vorteilhafte Ausgestaltungen der vorliegenden Erfindung sind Gegenstand der Unteransprüche.

In einer bevorzugten Ausführungsform der vorliegenden Erfindung sind die erste Verzahnungsgeometrie und die zweite Verzahnungsgeometrie derart ausgebildet, dass in Axialschnitten mit beliebigen Umfangswinkel bei einem Stillstand der Kurvenscheibe der radialer Abstand zwischen der Außenkonturlinie des Flexrads und der Innenkonturlinie des Hohlrads über die axiale Ausdehnung des Verzahnungsbereichs im mittleren Bereich konstant ist und in dem ersten Seitenbereich und dem zweiten Seitenbereich zu den jeweiligen axialen Enden des Verzahnungsbereichs, vorzugsweise stetig, ansteigt. Dies ist eine bevorzugte Ausführungsform, bei der auch etwaige Bereiche der Innenverzahnung und Außenverzahnung im Verzahnungsbereich, die nicht mit der jeweils anderen Verzahnung in Kontakt kommen, derart ausgebildet sind, dass sich der Verlauf des radialen Abstands zwischen der Außenkonturlinie und Innenkonturlinie für die genannten Axialschnitte bei Stillstand der Kurvenscheibe mit dem mittleren Bereich, dem ersten Seitenbereich und dem zweiten Seitenbereich ergibt.

In einer weiteren bevorzugten Ausführungsform der vorliegenden Erfindung entsprechen eine axiale Ausdehnung des ersten Seitenbereichs 20 bis 45%, eine axiale Ausdehnung des mittleren Bereichs 10 bis 60% und eine axiale Ausdehnung des zweiten Seitenbereichs 20 bis 45% der axialen Ausdehnung des Verzahnungsbereichs entsprechen. Vorzugsweise entsprechen die axiale Ausdehnung des ersten Seitenbereichs 35 bis 45%, die axiale Ausdehnung des mittleren Bereichs 10 bis 30% und die axiale Ausdehnung des zweiten Seitenbereichs 35 bis 45% der axialen Ausdehnung des Verzahnungsbereichs. Es hat sich gezeigt, dass sich diese Verhältnisse der axialen Ausdehnungen des ersten Seitenbereichs, des mittleren Seitenbereichs und des zweiten Seitenbereichs zueinander vorteilhaft auf die Drehmomentübertragung in Kombination mit einer gleichmäßigeren Kontaktdruckverteilung über die Außenverzahnung und Innenverzahnung auswirken.

In einer weiteren bevorzugten Ausführungsform der vorliegenden Erfindung verläuft die Außenkonturlinie im mittleren Bereich parallel zur Achse. Eine derartige erste Verzahnungsgeometrie und damit einhergehende zweite Verzahnungsgeometrie kann effizient gefertigt werden und erlaubt eine gute Drehmomentübertragung.

In einer weiteren bevorzugten Ausführungsform der vorliegenden Erfindung schließt sich die Außenkonturlinie im ersten Seitenbereich und im zweiten Seitenbereich tangential an die Außenkonturlinie im mittleren Bereich an und schließt sich die Innenkonturlinie im ersten Seitenbereich und im zweiten Seitenbereich tangential an die Innenkonturlinie im mittleren Bereich an. Dies fördert das harmonische Anschmiegen der Außenverzahnung an die Innenverzahnung am Übergang vom mittleren Bereich zu dem ersten Seitenbereich und zu dem zweiten Seitenbereich.

In einer weiteren bevorzugten Ausführungsform der vorliegenden Erfindung weisen die Außenkonturlinie eine erste Krümmung zur Achse und die Innenkonturlinie eine zweite Krümmung zur Achse im ersten Seitenbereich auf, wobei
- die erste Krümmung und die zweite Krümmung ungleich 0 sind und ein gleiches Vorzeichen aufweisen,
- die erste Krümmung gleich 0 ist und die zweite Krümmung eine konkave Krümmung zur Achse ist, wobei die Außenkonturlinie im ersten Seitenbereich vorzugsweise parallel zur Achse verläuft, oder
- die zweite Krümmung gleich 0 ist und die erste Krümmung eine konvexe Krümmung zur Achse ist, wobei die Innenkonturlinie im ersten Seitenbereich vorzugsweise parallel zur Achse verläuft.

Vorzugsweise ist die erst Krümmung und/oder die zweite Krümmung konstant.

Diese unterschiedlichen Ausführungsformen des Verzahnungsbereichs im ersten Seitenbereich fördern das harmonische Anschmiegen der Außenverzahnung an die Innenverzahnung in dem ersten Seitenbereich.

In einer weiteren bevorzugten Ausführungsform der vorliegenden Erfindung weisen die Außenkonturlinie eine dritte Krümmung zur Achse und die Innenkonturlinie eine vierte Krümmung zur Achse im zweiten Seitenbereich auf, wobei
- die dritte Krümmung und die vierte Krümmung ungleich 0 sind und ein gleiches Vorzeichen aufweisen,
- die dritte Krümmung gleich 0 ist und die vierte Krümmung eine konkave Krümmung zur Achse ist, wobei die Außenkonturlinie im zweiten Seitenbereich vorzugsweise parallel zur Achse verläuft, oder
- die vierte Krümmung gleich 0 ist und die dritte Krümmung eine konvexe Krümmung zur Achse ist, wobei die Innenkonturlinie im zweiten Seitenbereich vorzugsweise parallel zur Achse verläuft.

Vorzugsweise ist die dritte Krümmung und/oder die vierte Krümmung konstant.

Diese unterschiedlichen Ausführungsformen des Verzahnungsbereichs im zweiten Seitenbereich fördern das harmonische Anschmiegen der Außenverzahnung an die Innenverzahnung in dem ersten Seitenbereich.

In einer besonders bevorzugten Ausführungsform ist vorgesehen, dass die erste Krümmung, die zweite Krümmung, die dritte Krümmung und die vierte Krümmung ungleich 0 sind und das gleiche Vorzeichen aufweisen, wobei die Außenkonturlinie vorzugsweise im ersten Seitenbereich und zweiten Seitenbereich konvex zur Achse gekrümmt ist.

In einer alternativen besonders bevorzugten Ausführungsform ist vorgesehen, dass die Außenkonturlinie oder die Innenkonturlinie über die axiale Ausdehnung des Verzahnungsbereichs parallel zur Achse verläuft. Dies vereinfacht die Fertigung des Flexrads oder des Hohlrads, je nachdem ob die Außenkonturlinie oder die Innenkonturlinie über die axiale Ausdehnung des Verzahnungsbereichs parallel zur Achse verläuft.

In einer weiteren bevorzugten Ausführungsform der vorliegenden Erfindung weisen die Zähne des Flexrads anschließend an Eines der axialen Enden des Verzahnungsbereichs eine konkave Andrehung auf, wobei die Zähne des Flexrads vorzugsweise anschließend an das Andere der axialen Enden des Verzahnungsbereichs eine 30°-Fase aufweisen. Dadurch kann der Bereich Außenverzahnung im Verzahnungsbereich gegenüber sich axial anschließende Abschnitte des Flexrads freigestellt werden.

In einer weiteren bevorzugten Ausführungsform der vorliegenden Erfindung liegt eine Zunahme des radialen Abstands pro mm in Richtung des jeweiligen axialen Endes des Verzahnungsbereichs im ersten Seitenbereich und zweiten Seitenbereich im Wertebereich von 0,01 mm/mm bis 0,1 mm/mm, vorzugsweise im Wertebereich von 0,02 mm/mm bis 0,05 mm/mm. Es hat sich gezeigt, dass eine Zunahme des radialen Abstands in diesem Bereich eine homogenere Bauteilbeanspruchung bei guter Drehmomentübertragung ermöglicht.

In einer besonders bevorzugten Ausführungsform ist vorgesehen, dass für die erste Verzahnungsgeometrie und/oder die zweite Verzahnungsgeometrie eine Zahnhöhe von Zahnfuß bis Zahnkopf über die axiale Ausdehnung des Verzahnungsbereichs konstant ist. Hierfür sind entweder jeweils die Kopffläche und die Fußfläche der ersten Verzahnungsgeometrie und/oder der zweiten Verzahnungsgeometrie parallel zur Achse ausgebildet oder weißen zumindest in den Seitenbereichen die gleiche Kontur auf.

In einer alternativen bevorzugten Ausführungsform ist vorgesehen, dass für die erste Verzahnungsgeometrie und/oder die zweite Verzahnungsgeometrie eine Zahnhöhe von Zahnfuß bis Zahnkopf über die axiale Ausdehnung des Verzahnungsbereichs variiert. Hierfür ist beispielsweise die Fußfläche der ersten Verzahnungsgeometrie und/oder der zweiten Verzahnungsgeometrie parallel zur Achse ausgebildet und die Kopffläche weißt zumindest im ersten und zweiten Seitenbereiche eine Kontur auf die von der Kontur der Kopffläche im mittleren Bereich abweicht.

Nachfolgend werden Ausführungsbeispiele eines erfindungsgemäßen Wellgetriebes anhand von Zeichnungen näher erläutert.

In den Zeichnungen zeigen:
- Figur 1:: eine Explosionsdarstellung eines ersten Ausführungsbeispiels eines erfindungsgemäßen Wellgetriebes mit Hohlrad, Flexrad und Kurvenscheibe,
- Figur 2:: einen Ausschnitt eines Axialenschnitts durch das Hohlrad und das Flexrad des ersten Ausführungsbeispiels des erfindungsgemäßen Wellgetriebes,
- Figur 3:: eine Detailansicht auf die Figur 2,
- Figur 4:: einen Ausschnitt eines Querschnitts durch das Hohlrad und das Flexrad des ersten Ausführungsbeispiels des erfindungsgemäßen Wellgetriebes an einer axialen Position im mittleren Bereich,
- Figur 5:: einen Ausschnitt eines Querschnitts durch das Hohlrad und das Flexrad des ersten Ausführungsbeispiels des erfindungsgemäßen Wellgetriebes an einer axialen Position im ersten Seitenbereich oder zweiten Seitenbereich, und
- Figur 6:: einen Ausschnitt eines Axialenschnitts durch das Hohlrad und das Flexrad eines zweiten Ausführungsbeispiels des erfindungsgemäßen Wellgetriebes.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen. Ebenso wir auf vorangehende oder nachfolgende Figuren bezuggenommen, falls in einer Figurenbeschreibung Bezugszeichen enthalten sind, die in der zugehörigen Figur nicht gezeigt sind.

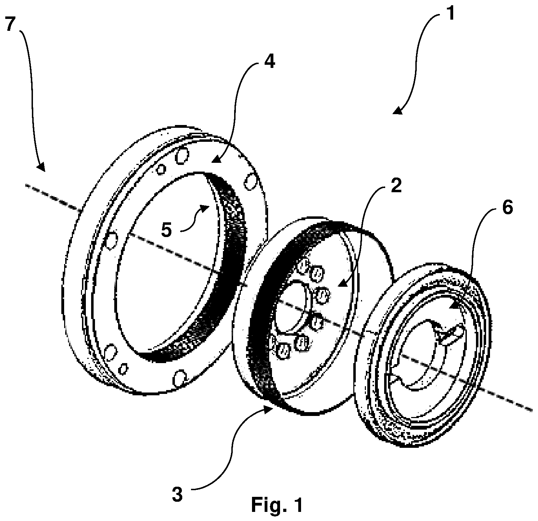

Figur 1 zeigte eine Explosionsdarstellung eines ersten Ausführungsbeispiels eines erfindungsgemäßen Wellgetriebes 1 mit einem elastisch verformbaren Flexrad 2 mit Außenverzahnung 3, einem Hohlrad 4 mit Innenverzahnung 5 und einer Kurvenscheibe 6. Das Flexrad 2, das Hohlrad 4 und die Kurvenscheibe 6 sind um eine gemeinsame Achse 7, die eine axiale Richtung des Wellgetriebes 1 definiert, angeordnet. Dabei weißt die Außenverzahnung 3 eine Mehrzahl von Zähnen 8 des Flexrads 2 und die Innenverzahnung 5 eine Mehrzahl von Zähnen 9 des Hohlrads 4 auf, wobei die Mehrzahl an Zähnen 8 des Flexrads 2 kleiner als die Mehrzahl an Zähnen 9 des Hohlrads 4 ist und die Zähne 8 des Flexrads 2 jeweils eine erste Verzahnungsgeometrie und die Zähne 9 des Hohlrads 4 jeweils eine zweite Verzahnungsgeometrie aufweisen. Hierbei ist vorgesehen, dass die erste Verzahnungsgeometrie und die zweite Verzahnungsgeometrie derart ausgebildet sind, dass ein Verzahnungsbereich 10 der Zähne 8 des Flexrads 2 und der Zähne 9 des Hohlrads 4 in axialer Richtung in einen ersten Seitenbereich 12, einen mittleren Bereich 11 und einen zweiten Seitenbereich 13 aufteilbar ist, wobei sich der erste Seitenbereich 12 und der zweite Seitenbereich 13 jeweils an eines der zwei axialen Enden des mittleren Bereichs 11 anschließen und der erste Seitenbereich 12 und der zweite Seitenbereich 13 jeweils ein axiales Ende des Verzahnungsbereichs 10 umfassen, und in Axialschnitten mit einem Umfangswinkel, bei dem sich in radialer Richtung eine Zahnflanke eines Zahns 8 des Flexrads 2 mit einer Zahnflanke eines Zahns 9 des Hohlrads 4 überlappt, bei einem Stillstand der Kurvenscheibe 6 ein radialer Abstand 14 zwischen einer Außenkonturlinie 15 des Flexrads 2 und einer Innenkonturlinie 16 des Hohlrads 4 über eine axiale Ausdehnung 17 des Verzahnungsbereichs 10 im mittleren Bereich 11 konstant ist und in dem ersten Seitenbereich 12 und dem zweiten Seitenbereich 13 zu den jeweiligen axialen Enden des Verzahnungsbereichs 10 stetig ansteigt.

Wie im ersten Ausführungsbeispiel des Wellgetriebes 1 gezeigt, kann dabei die erste Verzahnungsgeometrie und die zweite Verzahnungsgeometrie derart ausgebildet sein, dass in Axialschnitten mit beliebigen Umfangswinkel bei einem Stillstand der Kurvenscheibe 3 der radialer Abstand 14 zwischen der Außenkonturlinie 15 des Flexrads 2 und der Innenkonturlinie 16 des Hohlrads 4 über die axiale Ausdehnung 17 des Verzahnungsbereichs 10 im mittleren Bereich 11 konstant ist und in dem ersten Seitenbereich 12 und dem zweiten Seitenbereich 13 zu den jeweiligen axialen Enden des Verzahnungsbereichs 10 stetig ansteigt.

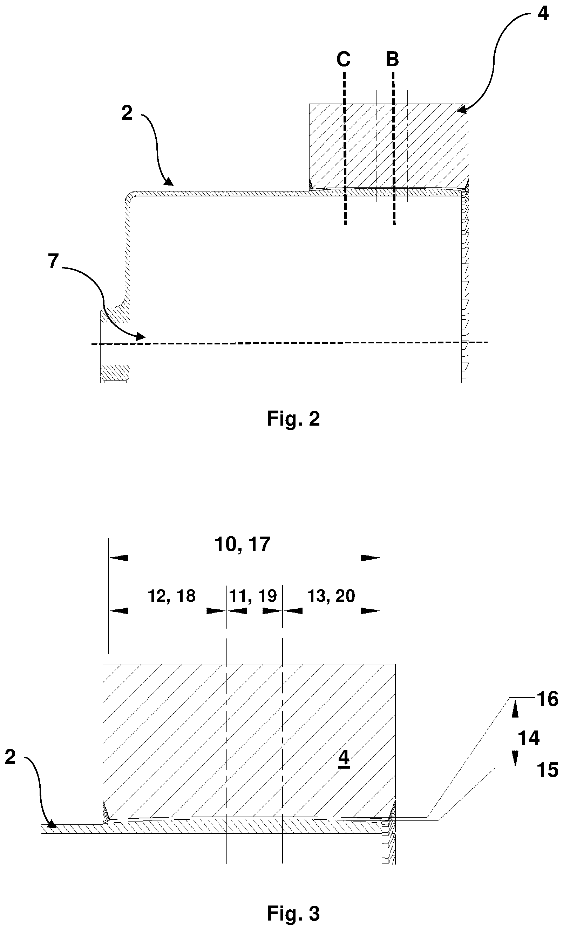

In Figur 2 ist ein Ausschnitt und in Figur 3 ein Detailausschnitt eines derartigen Axialschnitts durch das Hohlrad 4 und das Flexrad 2 des ersten Ausführungsbeispiels des erfindungsgemäßen Wellgetriebes 1 gezeigt. Der Umfangswinkel des in den Figuren 2 und 3 gezeigten Axialschnitts ist dabei derart gewählt, dass eine Schnittebene A des Axialschnitts die Außenverzahnung 3 genau zwischen zwei Zahnköpfen von zwei Zähnen 8 des Flexrads 2 und die Innenverzahnung 5 durch einen Zahn 9 des Hohlrads 4 schneidet, der gerade symmetrisch zu der Schnittebene A zwischen den zwei Zähnen 8 des Flexrads angeordnet ist und mit beiden Zähnen 8 des Flexrads 2 in Kontakt steht. Entsprechend befindet sich bei dem gezeigten Axialschnitt die Kurvenscheibe 6 in einer derartigen Position, dass sich die maximale radiale Ausdehnung der Kurvenscheibe 6 in der Schnittebene A des Axialschnitts befindet.

Die Figuren 2 und 3 zeigen den Verlauf der Außenkonturlinie 15 und Innenkonturlinie 16 des ersten Ausführungsbeispiels. Dabei verläuft die Außenkonturlinie 15 und damit auch die Innenkonturlinie 16 im mittleren Bereich 11 parallel zur Achse 7. Im ersten Seitenbereich 12 schließt sich die Außenkonturlinie 15 tangential an die Außenkonturlinie 15 im mittleren Bereich 11 an und weißt eine erste Krümmung auf, die konvex zur Achse 7 verläuft, und schließt sich die Innenkonturlinie 16 tangential an die Innenkonturlinie 16 im mittleren Bereich 11 an und weißt eine zweite Krümmung auf, die konvex zur Achse 7 verläuft. Dabei sind die erste Krümmung und zweite Krümmung derart ausgebildet, dass der radiale Abstand 14 über den ersten Seitenbereich 12 zum axialen Ende des Seitenbereichs 12 / Verzahnungsbereichs 10 stetig steigt. Im zweiten Seitenbereich 13 schließt sich die Außenkonturlinie 15 tangential an die Außenkonturlinie 15 im mittleren Bereich 11 an und weißt eine dritte Krümmung auf, die konvex zur Achse 7 verläuft, und schließt sich die Innenkonturlinie 16 tangential an die Innenkonturlinie 16 im mittleren Bereich 11 an und weißt eine vierte Krümmung auf, die konvex zur Achse 7 verläuft. Dabei sind die dritte Krümmung und vierte Krümmung derart ausgebildet, dass der radiale Abstand 14 über den ersten Seitenbereich 12 zum axialen Ende des Seitenbereichs 12 / Verzahnungsbereichs 10 stetig steigt. Daneben entsprechen eine axiale Ausdehnung 18 des ersten Seitenbereichs 12 ~40%, eine axiale Ausdehnung 19 des mittleren Bereichs 11 ~20% und eine axiale Ausdehnung 20 des zweiten Seitenbereichs 13 ~40% der axialen Ausdehnung 17 des Verzahnungsbereichs 10.

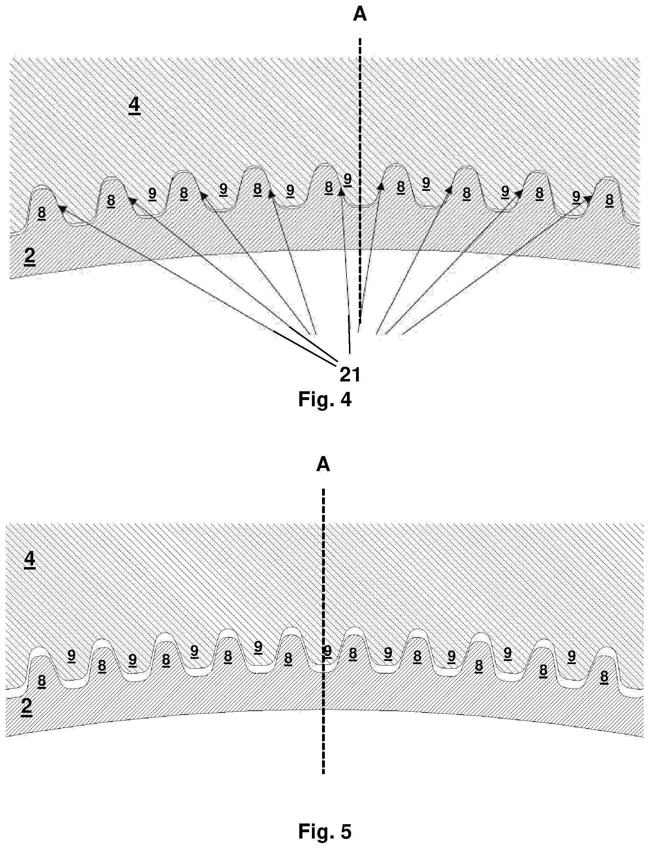

Figur 4 zeigt einen Ausschnitt eines Querschnitts durch das Hohlrad 2 und das Flexrad 4 des ersten Ausführungsbeispiels des erfindungsgemäßen Wellgetriebes 1 an einer axialen Position im mittleren Bereich 11, wobei die in Figur 4 gezeigte Schnittebene B in Figur 2 eingezeichnet ist und die in den Figuren 2 und 3 gezeigte Schnittebene A in der Figur 4 eingezeichnet ist. Daneben zeigt Figur 5 einen Ausschnitt eines Querschnitts durch das Hohlrad 2 und das Flexrad 4 des ersten Ausführungsbeispiels des erfindungsgemäßen Wellgetriebes 1 an einer axialen Position im ersten Seitenbereich 12 oder im zweiten Seitenbereich 13, wobei die in Figur 5 gezeigte Schnittebene C in Figur 2 eingezeichnet ist und die in den Figuren 2 und 3 gezeigte Schnittebene A in der Figur 5 eingezeichnet ist. Die Figuren 4 und 5 zeigen damit in Kombination mit den Figuren 2 und 3 die dreidimensionale erste Verzahnungsgeometrie und zweite Verzahnungsgeometrie, wobei in Figur 4 der Zahnkontakt 21 zwischen Zähnen 8 des Flexrads 2 und Zähnen 9 des Hohlrads 4 gekennzeichnet ist.

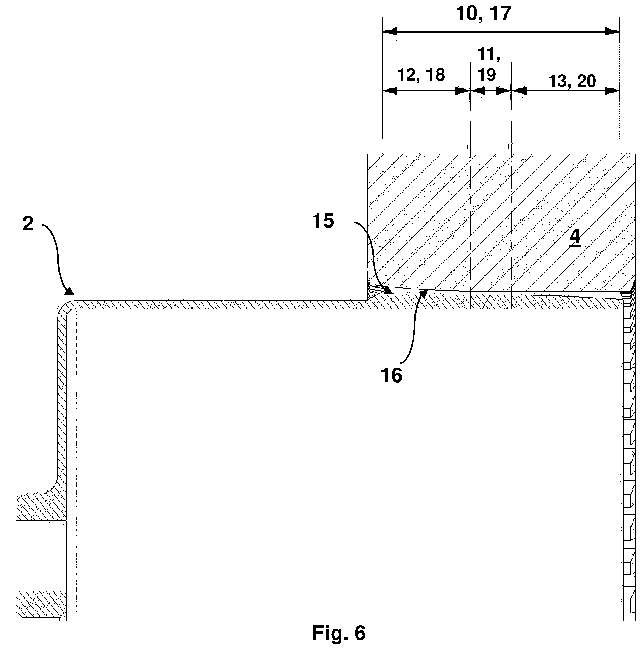

Figur 6 zeigt einen Ausschnitt eines Axialschnitts durch das Hohlrad 2 und das Flexrad 4 eines zweiten Ausführungsbeispiels des erfindungsgemäßen Wellgetriebes 1. Das zweite Ausführungsbeispiel unterscheidet sich vom ersten Ausführungsbeispiel nur dadurch, dass die erste Verzahnungsgeometrie und die zweite Verzahnungsgeometrie des zweiten Ausführungsbeispiels derart ausgebildet sind, dass die erste Krümmung gleich 0 ist, die zweite Krümmung konkav zur Achse 7 verläuft, die dritte Krümmung konvex zur Achse 7 verläuft und die vierte Krümmung gleich 0 ist.

### Bezugszeichenliste

- 1: Wellgetriebe
- 2: Flexrad
- 3: Außenverzahnung
- 4: Hohlrad
- 5: Innenverzahnung
- 6: Kurvenscheibe
- 7: Achse
- 8: Zahn des Flexrads
- 9: Zahn des Hohlrads
- 10: Verzahnungsbereich
- 11: mittlerer Bereich
- 12: erster Seitenbereich
- 13: zweiter Seitenbereich
- 14: radialer Abstand
- 15: Außenkonturlinie
- 16: Innenkonturlinie
- 17: axiale Ausdehnung des Verzahnungsbereichs
- 18: axiale Ausdehnung des ersten Seitenbereichs
- 19: axiale Ausdehnung des mittleren Bereichs
- 20: axiale Ausdehnung des zweiten Seitenbereichs
- 21: Zahnkontakt
- A: Schnittebene
- B: Schnittebene
- C: Schnittebene

## Patentansprüche

1. Wellgetriebe (1) mit einem elastisch verformbaren Flexrad (2) mit Außenverzahnung (3), einem Hohlrad (4) mit Innenverzahnung (5) und einer Kurvenscheibe (6), wobei das Flexrad (2), das Hohlrad (4) und die Kurvenscheibe (6) um eine gemeinsame Achse (7), die eine axiale Richtung des Wellgetriebes (1) definiert, angeordnet sind, wobei die Außenverzahnung (3) eine Mehrzahl von Zähnen (8) des Flexrads (2) und die Innenverzahnung (5) eine Mehrzahl von Zähnen (9) des Hohlrads (4) aufweist und die Mehrzahl an Zähnen (8) des Flexrads (2) kleiner als die Mehrzahl an Zähnen (9) des Hohlrads (4) ist, wobei die Zähne (8) des Flexrads (2) jeweils eine erste Verzahnungsgeometrie und die Zähne (9) des Hohlrads (4) jeweils eine zweite Verzahnungsgeometrie aufweisen, **dadurch gekennzeichnet, dass** die erste Verzahnungsgeometrie und die zweite Verzahnungsgeometrie derart ausgebildet sind, dass ein Verzahnungsbereich (10) der Zähne (8) des Flexrads (2) und der Zähne (9) des Hohlrads (4) in axialer Richtung in einen ersten Seitenbereich (12), einen mittleren Bereich (11) und einen zweiten Seitenbereich (13) aufteilbar ist, wobei sich der erste Seitenbereich (12) und der zweite Seitenbereich (13) jeweils an eines der zwei axialen Enden des mittleren Bereichs (11) anschließen, und in Axialschnitten mit einem Umfangswinkel, bei dem sich in radialer Richtung eine Zahnflanke eines Zahns (8) des Flexrads (2) mit einer Zahnflanke eines Zahns (9) des Hohlrads (4) überlappt, bei einem Stillstand der Kurvenscheibe (6) ein radialer Abstand (14) zwischen einer Außenkonturlinie (15) des Flexrads (2) und einer Innenkonturlinie (16) des Hohlrads (4) über eine axiale Ausdehnung (17) des Verzahnungsbereichs (10) im mittleren Bereich (11) konstant ist und in dem ersten Seitenbereich (12) und dem zweiten Seitenbereich (13) zu den jeweiligen axialen Enden des Verzahnungsbereichs (10), vorzugsweise stetig, ansteigt.

2. Wellgetriebe (1) nach Anspruch 1, **dadurch gekennzeichnet, dass** die erste Verzahnungsgeometrie und die zweite Verzahnungsgeometrie derart ausgebildet sind, dass in Axialschnitten mit beliebigen Umfangswinkel bei einem Stillstand der Kurvenscheibe (6) der radiale Abstand (14) zwischen der Außenkonturlinie (15) des Flexrads (2) und der Innenkonturlinie (16) des Hohlrads (4) über die axiale Ausdehnung (17) des Verzahnungsbereichs (10) im mittleren Bereich (11) konstant ist und in dem ersten Seitenbereich (12) und dem zweiten Seitenbereich (13) zu den jeweiligen axialen Enden des Verzahnungsbereichs (10), vorzugsweise stetig, ansteigt.

3. Wellgetriebe (1) nach Anspruch 1 oder 2, **dadurch gekennzeichnet, dass** eine axiale Ausdehnung (18) des ersten Seitenbereichs (12) 20 bis 45%, eine axiale Ausdehnung (19) des mittleren Bereichs (11) 10 bis 60% und eine axiale Ausdehnung (20) des zweiten Seitenbereichs (13) 20 bis 45% der axialen Ausdehnung (17) des Verzahnungsbereichs (10) entsprechen, wobei vorzugsweise die axiale Ausdehnung (18) des ersten Seitenbereichs (12) 35 bis 45%, die axiale Ausdehnung (19) des mittleren Bereichs (11) 10 bis 30% und die axiale Ausdehnung (20) des zweiten Seitenbereichs (13) 35 bis 45% der axialen Ausdehnung (17) des Verzahnungsbereichs (10) entsprechen.

4. Wellgetriebe (1) nach einem der Ansprüche 1 bis 3, **dadurch gekennzeichnet, dass** die Außenkonturlinie (15) im mittleren Bereich (11) parallel zur Achse (7) verläuft.

5. Wellgetriebe (1) nach einem der Ansprüche 1 bis 4, **dadurch gekennzeichnet, dass** sich die Außenkonturlinie (15) im ersten Seitenbereich (12) und im zweiten Seitenbereich (13) tangential an die Außenkonturlinie (15) im mittleren Bereich (11) anschließt und sich die Innenkonturlinie (16) im ersten Seitenbereich (12) und im zweiten Seitenbereich (13) tangential an die Innenkonturlinie (16) im mittleren Bereich (11) anschließt.

6. Wellgetriebe (1) nach einem der Ansprüche 1 bis 5, **dadurch gekennzeichnet, dass** die Außenkonturlinie (15) eine erste Krümmung zur Achse (7) und die Innenkonturlinie (16) eine zweite Krümmung zur Achse (7) im ersten Seitenbereich aufweisen, wobei
• die erste Krümmung und die zweite Krümmung ungleich 0 sind und ein gleiches Vorzeichen aufweisen,
• die erste Krümmung gleich 0 ist und die zweite Krümmung eine konkave Krümmung zur Achse (7) ist, wobei die Außenkonturlinie (15) im ersten Seitenbereich (12) vorzugsweise parallel zur Achse (7) verläuft, oder
• die zweite Krümmung gleich 0 ist und die erste Krümmung eine konvexe Krümmung zur Achse (7) ist, wobei die Innenkonturlinie im ersten Seitenbereich (12) vorzugsweise parallel zur Achse (7) verläuft.

7. Wellgetriebe (1) nach Anspruch 6, **dadurch gekennzeichnet, dass** die erst Krümmung und/oder die zweite Krümmung konstant ist.

8. Wellgetriebe (1) nach einem der Ansprüche 1 bis 7, **dadurch gekennzeichnet, dass** die Außenkonturlinie (15) eine dritte Krümmung zur Achse (7) und die Innenkonturlinie (16) eine vierte Krümmung zur Achse (7) im zweiten Seitenbereich (13) aufweisen, wobei
• die dritte Krümmung und die vierte Krümmung ungleich 0 sind und ein gleiches Vorzeichen aufweisen,
• die dritte Krümmung gleich 0 ist und die vierte Krümmung eine konkave Krümmung zur Achse (7) ist, wobei die Außenkonturlinie (15) im zweiten Seitenbereich (13) vorzugsweise parallel zur Achse (7) verläuft, oder
• die vierte Krümmung gleich 0 ist und die dritte Krümmung eine konvexe Krümmung zur Achse (7) ist, wobei die Innenkonturlinie (16) im zweiten Seitenbereich (13) vorzugsweise parallel zur Achse (7) verläuft.

9. Wellgetriebe (1) nach Anspruch 8, **dadurch gekennzeichnet, dass** die dritte Krümmung und/oder die vierte Krümmung konstant ist.

10. Wellgetriebe (1) nach Anspruch 6 oder 7 und 8 oder 9, **dadurch gekennzeichnet, dass** die erste Krümmung, die zweite Krümmung, die dritte Krümmung und die vierte Krümmung ungleich 0 sind und das gleiche Vorzeichen aufweisen, wobei die Außenkonturlinie (15) vorzugsweise im ersten Seitenbereich (12) und zweiten Seitenbereich (13) konvex zur Achse (7) gekrümmt ist.

11. Wellgetriebe (1) nach Anspruch 6 oder 7 und 8 oder 9, **dadurch gekennzeichnet, dass** die Außenkonturlinie (15) oder die Innenkonturlinie (16) über die axiale Ausdehnung (17) des Verzahnungsbereichs (10) parallel zur Achse (7) verläuft.

12. Wellgetriebe (1) nach einem der Ansprüche 1 bis 11, **dadurch gekennzeichnet, dass** die Zähne (8) des Flexrads (2) anschließend an Eines der axialen Enden des Verzahnungsbereichs (10) eine konkave Andrehung aufweisen, wobei die Zähne (8) des Flexrads (2) vorzugsweise anschließend an das Andere der axialen Enden des Verzahnungsbereichs (10) eine 30°-Fase aufweisen.

13. Wellgetriebe (1) nach einem der Ansprüche 1 bis 12, **dadurch gekennzeichnet, dass** eine Zunahme des radialen Abstands (14) pro mm in Richtung des jeweiligen axialen Endes des Verzahnungsbereichs (10) im ersten Seitenbereich (12) und zweiten Seitenbereich (13) im Wertebereich von 0,01 mm/mm bis 0,1 mm/mm, vorzugsweise im Wertebereich von 0,02 mm/mm bis 0,05 mm/mm, liegt.

14. Wellgetriebe (1) nach einem der Ansprüche 1 bis 13, **dadurch gekennzeichnet, dass** für die erste Verzahnungsgeometrie und/oder die zweite Verzahnungsgeometrie eine Zahnhöhe von Zahnfuß bis Zahnkopf über die axiale Ausdehnung (17) des Verzahnungsbereichs (10) konstant ist.

15. Wellgetriebe (1) nach einem der Ansprüche 1, 2 bis 13, **dadurch gekennzeichnet, dass** für die erste Verzahnungsgeometrie und/oder die zweite Verzahnungsgeometrie eine Zahnhöhe von Zahnfuß bis Zahnkopf über die axiale Ausdehnung (17) des Verzahnungsbereichs (10) variiert.
